# EUROPÄISCHE PATENTSCHRIFT

(11) **EP 0 852 878 B1**
(45) Veröffentlichungstag und Bekanntmachung des Hinweises auf die Patenterteilung: **03.05.2000**
(21) Anmeldenummer: 96945339.8
(22) Anmeldetag: 25.09.1996
(51) Int. Cl.: H04N 1/48

(54) **ABTASTVORRICHTUNG ZUR OPTISCHEN ABTASTUNG UND AUSWERTUNG VON GRAFIK UND/ODER TEXT AUF BLATTFÖRMIGEN VORLAGEN MIT FARBIGEM HINTERGRUND**
SCANNER FOR OPTICALLY SCANNING AND EVALUATING GRAPHICS AND/OR TEXT ON SHEETS OF DOCUMENTS WITH COLOURED BACKGROUND
DISPOSITIF D'EXPLORATION OPTIQUE ET D'EVALUATION DE GRAPHIQUES ET/OU DE TEXTE SUR DES FEUILLES DE DOCUMENTS A FOND COLORE

(30) Priorität: 25.09.1995 DE 19535539
(43) Veröffentlichungstag der Anmeldung: 15.07.1998
(73) Patentinhaber: CGK Computer Gesellschaft Konstanz mbH, 78467 Konstanz (DE)
(72) Erfinder: SCHNITZLEIN, Markus, D-78315 Radolfzell (DE)
(74) Vertreter: Zedlitz, Peter
(86) Internationale Anmeldenummer: DE9601816
(87) Internationale Veröffentlichungsnummer: WO9713355

(56) Entgegenhaltungen:
- EP-A- 0 323 214
- US-A- 4 517 589
- US-A- 4 811 114
- US-A- 4 907 078
- PATENT ABSTRACTS OF JAPAN vol. 012, no. 063 (E-585), 25.Februar 1988 & JP 62 206986 A (FUJI PHOTO FILM CO LTD), 11.September 1987,

## Beschreibung

Die Erfindung betrifft eine Abtastvorrichtung gemäß den Merkmalen des Oberbegriffs des Anspruchs 1.

Eine derartige Abtastvorrichtung ist im Prinzip aus US-A-4 507 689 bekannt. Bei diesem bekannten Farbbildaufnahmegerät für Kopier- oder Faxgeräte wird eine Vorlage von einer Lichtquelle beleuchtet und der von der Vorlage kommende Lichtstrahl zur Unterscheidung von vier verschiedenen Farben mit Hilfe eines Strahlteilers in einen kurzwelligen und in einen langwelligen Bereich aufgespalten. Beide Teilstrahlen werden auf je einen CCD-Bildaufnehmer gelenkt und dort in elektrische Bildsignale umgewandelt.

Aus US-A-4 907 078 ist ein ähliches Farbbildabtastgerät bekannt, bei dem der von der Vorlage kommende Lichtstrahl in zwei Strahlen unterschiedlicher Wellenlängen aufgespalten wird. Die beiden Teilstrahlen werden von je einer Abtasteinheit in elektrische Signale umgewandelt. Die so erhaltenen Signale werden zu Farbsignalen verarbeitet, die mehr als vier Farben darstellen, um einen Farbausdruck der abgetasteten Vorlage zu erzeugen.

Im Rahmen der automatischen Dokumentenverarbeitung sind, abhängig von der jeweils zu lösenden Aufgabe, grundsätzlich zwei Aspekte bei der Imageaufnahme zu beachten. Der eine Aspekt betrifft die Bildaufbereitung im Hinblick auf eine nachfolgende Zeichenerkennung, während der andere Aspekt die Bilddatenerfassung zum Zwecke der Bildarchivierung betrifft. Bei der Zeichenerkennung geht es vornehmlich um das schnelle und zuverlässige Erkennen und Interpretieren der im Dokument enthaltenen alphanumerischen Zeichen. Deshalb sollen bei der Bildgewinnung möglichst nur die hierfür relevanten Zeichenstrukturen erfaßt werden. Bei mehrfarbigen Dokumenten ist es darüber hinaus wichtig, die Gestaltungsfarbe der Dokumente genau zu spezifizieren, damit bei der Bildaufnahme mit Hilfe einer entsprechenden Farbfilterung die nicht zur Zeicheninformation gehörenden Bestandteile des Bildes möglichst vollständig unterdrückt werden.

Bei der Bildaufzeichnung zum Zwecke der Archivierung und Dokumentation soll dagegen das gesamte Dokument mit allen relevanten Details, d.h. mit Bildhintergrund, mit Vordruck, Stempel oder dergleichen im Bild gespeichert werden. Es ist offensichtlich, daß dies der für die Zwecke der Zeichenerkennung geeigneten Bildaufbereitung widerspricht. Dennoch hat man bisher versucht, beiden Anforderungen mit Hilfe eines einzigen "gefilterten" Binärbildes gerecht zu werden. Dies führt jedoch zu zwei gravierenden Nachteilen. Zum einen enthält das auf diese Weise gewonnene Bild nicht alle dokumentbezogenen Informationen und ist deshalb als Archivbild nur bedingt geeignet. Zum anderen erlaubt dieses "gefilterte" Binärbild keine zuverlässige Korrekturmöglichkeit.

Es ist deshalb Aufgabe der Erfindung, eine sowohl den Anforderungen der Zeichenerkennung als auch denen der Bildarchivierung gerecht werdende Bilderfassung zu ermöglichen, dergestalt, daß bei der Dokumentenerfassung zwei Bilder möglichst gleicher Geometrie erzeugt werden, damit sie auch zu Korrekturzwecken genutzt werden können.

Die Lösung dieser Aufgabe ergibt sich, ausgehend von einer Abtastvorrichtung der eingangs genannten Art, erfindungsgemäß durch die Merkmale des Anspruchs 1. Vorteilhafte Weiterbildungen der Erfindung sind in Unteransprüchen angegeben.

Im folgenden wird ein Ausführungsbeispiel der Erfindung anhand der Zeichnung näher erläutert. Dabei zeigen
Figur 1 das Prinzip einer Abtastvorrichtung gemäß der Erfindung,
Figur 2 die Kennlinien der beiden Teilstrahlen des Farbteiles gemäß Figur 1 innerhalb des Farbspektrums,
Figur 3 das Farbspektrum für die den beiden Sensoranordnungen gemäß Figur 1 zugeordneten Teilstrahlen.

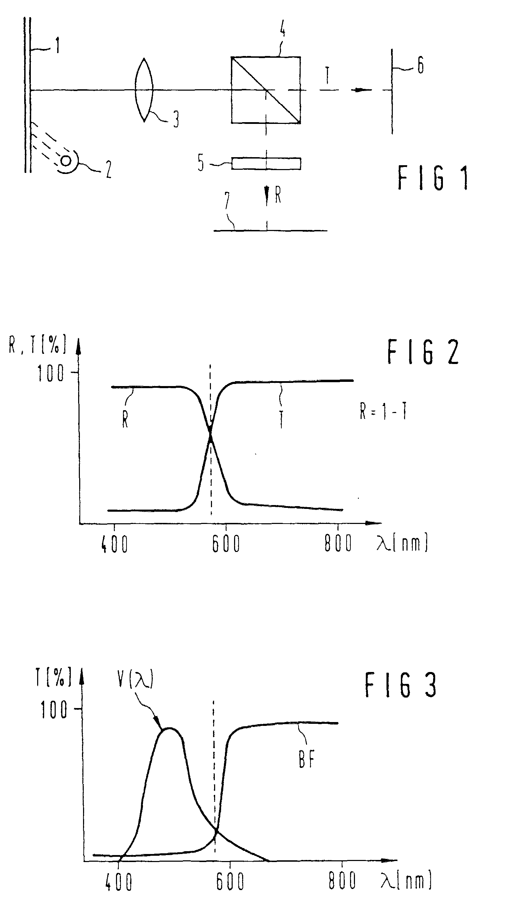

Die Figur 1 zeigt das Prinzip einer optischen Abtastvorrichtung zur automatischen Dokumentenverarbeitung mit einer Objektfläche 1, einer Lichtquelle 2, einer Objektivanordnung 3, einem Farbteiler 4, einem Farbfilter 5 und zwei Sensoranordnungen 6,7. Die dargestellte Anordnung erlaubt es, mit einer einzigen Dokumentabtastung zwei spektral unterschiedliche Bilder desselben Dokuments zu gewinnen, wobei eines der Bilder als Grundlage für die Zeichenerkennungsfunktion dient und das andere Bild als Archiv- oder Korrekturbild verwendet werden kann. Die Erzeugung der beiden Bilder erfolgt mittels des Farbteilers 4 in Form eines Doppelprismas, welches das einfallende Licht, nach Farben, d.h. nach Spektralbereichen getrennt, in einen Transmissionsstrahl T und in einen Reflexionsstrahl R teilt und jeweils einer der beiden Sensoranordnungen 6,7 zuführt. Beide Sensoranordnungen 6,7 schauen durch dieselbe Optik und somit auf dieselbe Abtaststelle. Die so gewonnenen Bilder sind deshalb geometrisch identisch. Durch den Farbteilungseffekt in Farbe und Komplementärfarbe ergibt sich keinerlei Intensitätsverlust. In der Komplementärfilterung werden genau die Farben mit optimalem Kontrast wiedergegeben, die bei der anderen Filterung unterdrückt werden.

Einzelheiten dieses Filterungsprozesses sind den Figuren 2 und 3 entnehmbar. Die Figur 2 zeigt den Intensitätsverlauf des Transmissionsstrahles T und des Reflexionsstrahles R im Spektrum des sichtbaren Lichts. Die gestrichelte Linie zeigt die Trennlinie zwischen den beiden Spektralbereichen bei ca. 580 nm. Die Figur 3 zeigt den im oberen Spektralbereich liegenden Transmissionsstrahl, der infolge der Filterung der roten Blindfarbe BF für die Zeichenerkennungsfunktion verwendet und der Sensoranordnung 6 zugeführt wird, während der durch das Farbfilter V(λ) gelenkte Reflexionsstrahl der Sensoranordnung 7 für die Bildarchivierung zugeführt wird.

## Patentansprüche

1. Abtastvorrichtung zur optischen Abtastung von Grafik und/oder Text auf blattförmigen Vorlagen mit farbigem Hintergrund, unter Verwendung einer Lichtquelle, einer planparallelen Glasplatte als Auflage für das abzutastende Objekt, einer Sensoranordnung, einer im Strahlengang zwischen Objekt und Sensoranordnung angeordneten optischen Einrichtung, sowie eines im Strahlengang zwischen optischer Einrichtung (3) und Sensoranordnung (6,7) angeordneten Farbteilers (4), der den Lichtstrahl, nach Farben getrennt, in einen langwelligeren Transmissionsstrahl (T) und eine kurzwelligeren Reflexionsstrahl (R) aufteilt,
**dadurch gekennzeichnet,**
daß dem Transmissionsstrahl (T) und dem Reflexionsstrahl (R) jeweils eine eigene, räumlich entsprechend angeordnete Sensoranordnung (6,7) zugeordnet ist und daß im Strahlengang des Reflexionsstrahls (R) zwischen Farbteiler (4) und Sensoranordnung (7) ein auf die menschliche Grundempfindlichkeit angepaßtes Farbfilter (5) angeordnet ist.

2. Abtastvorrichtung nach Anspruch 1,
**dadurch gekennzeichnet,** daß der Farbteiler (4) aus einem Doppelprisma mit einer zum einfallenden Lichtstrahl im Winkel von 45° verlaufenden Einfallsebene besteht.

3. Abtastvorrichtung nach Anspruch 1 oder 2,
**dadurch gekennzeichnet**, daß der Trennbereich zwischen Transmissionsstrahl (T) und Reflexionsstrahl (R) am Beginn des Rotlichtbereichs bei ca. 580 nm gewählt ist

## Claims

1. Scanner for optically scanning graphics and/or text on sheet documents with a coloured background, using a light source, a plane-parallel glass plate as support for the object to be scanned, a sensor arrangement, an optical device arranged in the beam path between the object and the sensor arrangement, and a colour splitter (4) which is arranged in the beam path between the optical device (3) and sensor arrangement (6, 7) and splits the light beam, separated by colour, into a relatively long wave transmitted beam (T) and a relatively short wave reflected beam (R), characterized in that the transmitted beam (T) and the reflected beam (R) are respectively assigned a dedicated sensor arrangement (6, 7) arranged correspondingly in spatial terms, and in that a colour filter (5) matched to the fundamental human sensitivity is arranged in the beam path of the reflected beam (R) between the colour splitter (4) and the sensor arrangement (7) .

2. Scanner as claimed in Claim 1, characterized in that the colour splitter (4) comprises a double prism with a plane of incidence running at an angle of 45° to the incident light beam.

3. Scanner according to Claim 1 or 2, characterized in that the separation region between the transmitted beam (T) and reflected beam (R) is selected at the start of the red light region at approximately 580 nm.

## Revendications

1. Dispositif d'exploration optique de graphiques et/ou de textes sur des feuilles de documents à fond coloré, en utilisant une source lumineuse, une plaque de verre à faces planes et parallèles comme support pour l'objet à explorer, un dispositif capteur, un dispositif optique placé sur le parcours du rayon entre l'objet et le dispositif capteur, ainsi qu'un séparateur de couleurs (4), placé sur le parcours du rayon entre le dispositif optique (3) et le dispositif capteur (6, 7) et qui décompose le rayon lumineux, en séparant les couleurs, en un rayon transmis (T) à grande longueur d'ondes et en un rayon réfléchi à courte longueur d'ondes,
**caractérisé par le fait**
qu'un dispositif capteur (6, 7), propre à chaque rayon et disposé d'une façon adéquate, est affecté respectivement au rayon transmis (T) et au rayon réfléchi (R) et par le fait que, sur le parcours du rayon réfléchi (R), un filtre de couleur adapté à la sensibilité de base de l'oeil humain est placé entre le séparateur de couleurs (4) et le dispositif capteur (7).

2. Dispositif d'exploration selon la revendication 1
**caractérisé par le fait**
que le séparateur de couleurs (4) est constitué par un prisme double dont la surface incidente forme un angle de 45° avec le rayon de lumière incident.

3. Dispositif d'exploration selon la revendication 1 ou la revendication 2
**caractérisé par le fait**
que la zone de séparation entre le rayon transmis (T) et le rayon réfléchi (R) est choisie au début de la gamme de la lumière rouge à environ 580 nm.
